# EUROPÄISCHE PATENTSCHRIFT

(11) **EP 1 913 363 B1**
(45) Veröffentlichungstag und Bekanntmachung des Hinweises auf die Patenterteilung: **04.04.2012**
(21) Anmeldenummer: 06775763.3
(22) Anmeldetag: 25.07.2006
(51) Int. Cl.: G01N 17/02, C23F 13/04

(54) **VERFAHREN UND VORRICHTUNG ZUR ÜBERWACHUNG UND DETEKTIERUNG VON BESCHICHTUNGSDEFEKTEN EINER ERD- ODER WASSERVERLEGTEN ROHRLEITUNG**
METHOD AND DEVICE FOR MONITORING AND DETECTING THE COATING DEFECTS OF AN UNDERGROUND OR UNDERWATER PIPELINE
PROCEDE ET DISPOSITIF DE SURVEILLANCE ET DE DETECTION DE DEFAUTS DE REVETEMENT D'UNE CANALISATION ENFOUIE DANS LA TERRE OU DANS L'EAU

(30) Priorität: 29.07.2005 DE 102005036508
(43) Veröffentlichungstag der Anmeldung: 23.04.2008
(73) Patentinhaber: Eupec Pipelines Services España, S.A.U., 28036 Madrid (ES)
(72) Erfinder: HERRAEZ, Carlos, E-28020 Madrid (ES); ABALLE, Alvaro, E-28020 Madrid (ES)
(74) Vertreter: Tanty, François
(86) Internationale Anmeldenummer: PCT/DE2006/001317
(87) Internationale Veröffentlichungsnummer: WO 2007/012326

(56) Entgegenhaltungen:
- EP-A- 1 152 235
- WO-A-2004/097460
- US-A- 4 940 944

## Beschreibung

Die Erfindung betrifft ein Verfahren und eine Vorrichtung zur Überwachung und Detektierung von Beschichtungsdefekten einer erd- oder wasserverlegten Rohrleitung, gemäß Patentansprüchen 1 und 9.

Korrosionsgefährdete Rohrleitungen werden je nach Grad und Art der Gefährdung durch passive oder aktive Schutzsysteme oder einer Kombination aus beiden geschützt. Der passive Schutz besteht aus einer Beschichtung der aktive Schutz ist entweder ein kathodischer Schutz oder ein Schutz über eine sogenannte Opferanode.

Die Beschichtung muss elektrisch isolierend sein, um einen direkten Kontakt der Rohrleitung mit dem elektrisch leitenden Medium Erdreich oder Wasser und damit einen Korrosionsangriff auf die Rohrleitung zu vermeiden.

Beim kathodischen Korrosionsschutz an erdverlegten Rohrleitungen, die mit einer elektrisch isolierenden Beschichtung versehen sind, wird die Rohrleitung dadurch gegen Korrosion an Fehlstellen der isolierenden Umhüllung geschützt, dass an der Rohrleitung eine Gleichspannung so angelegt wird, dass die Rohrleitung gegenüber dem die Rohrleitung umgebenden Erdreich ein elektrisch negatives Potential hat, bzw. als Kathode wirkt. Hierzu wird eine Gleichspannungsquelle mit ihrem negativen Pol mit der Rohrleitung verbunden und ihr positiver Pol bzw. die Anode wird geerdet.
Alternativ kann der aktive Schutz auch über die Anbringung von sogenannten Opferanoden an der Rohrleitung erfolgen. Die Grundlagen hierzu werden z. B. im Handbuch des kathodischen Korrosionsschutzes, VCH Verlag, 3. Auflage 1989 beschrieben.

Die Effektivität des passiven Schutzes der Rohrleitung über die Beschichtung ist abhängig von der Qualität, d. h. von der Fehlerfreiheit der Beschichtung. Beschädigungen an der Beschichtung, die einen elektrischen Kontakt des Rohres mit dem Erdreich oder dem Wasser verursachen, bewirken einen Korrosionsangriff des zu schützenden Stahrohres, der sich in größerflächigen Delaminationen der Beschichtung auswirken kann. Der Grad der Delamination ist dabei abhängig von der Art des Beschichtungssystems und den vorliegenden Korrosionsbedingungen (z. B. Leitfähigkeit des Erdreiches, pH- Wert, etc.).

Beschädigungen an der Beschichtung können beispielsweise beim Transport der Rohre auftreten, so dass üblicherweise vor der Verlegung der Rohrleitung eine Inspektion der Beschichtung auf Fehler und eine Ausbesserung der Fehlstellen erfolgt.

Die Beschichtung kann jedoch auch während des Betriebs der Rohrleitung beschädigt werden, z. B. bei Erdarbeiten im Bereich einer verlegten Rohrleitung, durch mikrobiologische Angriffe oder Setzungen und Verschiebungen im Erdreich.

Dies macht es erforderlich, die Rohrleitung regelmäßig auf etwaige Beschädigungen der Beschichtung zu kontrollieren, um größere Korrosionsschäden zu vermeiden, was bei öl-oder gasführenden Rohleitungen besonderes wichtig ist, um Leckagen aufgrund von Korrosionsschäden vorzubeugen.

Häufigere Leitungsinspektionen sind aus wirtschaftlichen Gründen jedoch nicht tragbar, da die Messungen aufwändig und teuer sind.

Nach dem Stand der Technik bekannte Verfahren zur Fehlerortung werden z. B. im Handbuch des kathodischen Korrosionsschutzes, VCH Verlag, 3. Auflage 1989, S. 112-124, beschrieben. Üblicherweise wird dabei aus dem Verlauf des Schutzstromes und dem Potentialverlauf in definierten Leitungsabschnitten auf mögliche Beschädigungen in der Beschichtung geschlossen.

Ein weiteres, auf der Messung des Potentialverlaufes und der Bestimmung des Widerstandes der Beschichtung über einen modulierten kathodischen Schutzstrom beruhendes Verfahren, ist in der DE 690 14 002 T2 offenbart.

Nachteilig bei diesen bekannten Verfahren ist jedoch, dass z. B. bei dem zu prüfenden Rohrleitungsabschnitt Signale von die Rohrleitung kreuzenden stromführenden Leitungen mit erfasst werden, und die erfassten Signalanzeigen einem möglichen Beschichtungsfehler nicht mehr eindeutig zugeordnet werden können. Grund hierfür ist, dass sich die analysierte Stromform aus dem eingespeisten Schutzstrom und dem Fremdstromsignal zusammensetzt.

Nachteilig ist außerdem, dass diese Verfahren nur in Kombination mit einem kathodischen Schutz der Rohrleitung anwendbar ist.

Aus der EP 0560 443 B 1 ist ein Verfahren zur Überwachung und Lokalisierung von Beschädigungen an der Beschichtung einer unterirdisch verlegten kathodisch geschützten Rohrleitung offenbart, bei dem durch Anlegen von überlagerten lokalen sinusförmigen Erregerströmen unterschiedlicher Frequenzen an die Rohrleitung und Messen der entsprechenden Spannungsantworten bzw. der Impedanz mögliche Beschädigungen detektiert werden. Hierbei wird mit einem mobilen Messsystem die Rohrleitung in konstanten 2 Meter langen Abschnitten auf mögliche Beschädigungen der Beschichtung untersucht

Dieses Verfahren hat mehrere Nachteile. Zum Einen ist das Verfahren ebenfalls nur in Kombination mit einer kathodischen Schutzeinrichtung anwendbar. Weiterhin kann nicht ausgeschlossen werden, dass über Fremdeinflüsse Störsignale mit erfasst werden und damit eine eindeutige Fehlerzuordnung nicht mehr möglich ist. Nachteilig ist außerdem, dass zur Anwendung dieses Verfahrens eine Prüfung direkt am Rohr erforderlich ist, was bei langen zu prüfenden Rohrleitungen sehr zeitaufwändig und teuer ist.

Aus der EP 1152 235 ist ein Verfahren zur Überwachung des Korrozionszustandes einer Rohrleitung zum Zwecke der Steuerung einer kathodischen Schutzinstallation offenbart.

Aus der US 4 940 944 ist bekannt, die Erfassung der Wellenform eines zeitabhängigen Signals, die Umwandlung des Signals in ein frequenzabhängiges Signal, und die Ermittlung von Dämpfungsgrad und Frequenzamplituden aufgrund des frequenzabhängigen Signals.

Aufgabe der Erfindung ist es, ein sicheres und kostengünstiges Verfahren zur Überwachung und Detektierung von Beschichtungsdefekten in einem definierten Abschnitt einer erd- oder wasserverlegten Rohleitung anzugeben, welches unabhängig von aktiven Korrosionsschutzverfahren angewendet wird und bei dem die weiteren Nachteile der bislang bekannten Verfahren vermieden werden.

Erfindungsgemäß wird diese Aufgabe dadurch gelöst, dass das Verfahren folgende Schritte beinhaltet:
- Taktweises Aufgeben eines Wechselstromsignals, dessen fest vorgegebene und stabile Frequenz unter Berücksichtigung der Toleranz im Vergleich zu den im Rahmen der Überwachung gemessenen Frequenzen möglicher äußerer Störsignale unterschiedlich ist
- Erfassen der Wellenform des Wechselstromsignals in den beidendigen Überwachungseinheiten des jeweils zu überwachenden Abschnittes zur Ermittlung des entfernungsabhängigen Dämpfungsgrades in Abhängigkeit von der Entfernung des Signals vom Ort der Beaufschlagung mit diesem Signal
- Umwandlung des zeitabhängigen Signals In ein frequenzabhängiges Signal

- Ermittlung der Frequenzamplituden entsprechend der Frequenz des Wechselstromsignals
- Ermittlung des Dämpfungsgrades der Frequenzamplituden innerhalb des zu überwachenden Rohrleitungsabschnittes und Vergleich mit zuvor in den beidendigen Überwachungseinheiten ermittelten Vergleichswerten.

Der große Vorteil des erfindungsgemäßen Verfahrens liegt darin, dass es damit möglich ist, auch nicht aktiv geschützte im Erdreich wie auch im Wasser verlegte beschichtete Rohrleitungen auf Beschichtungsschäden hin zu untersuchen. Vorteilhaft kann dieses Verfahren auch zur Fernüberwachung der Rohrleitung genutzt werden, so dass aufwändige vor Ort Überprüfungen entfallen können.

Vorteilhaft ist weiterhin, über die Ermittlung des Dämpfungsgrades des auf die Rohrleitung aufgegebenen Wechselstromsignals die Überwachung auch langer Leitungsrohrabschnitte, z. B. bis zu 50 km, auf einfache, kostengünstige und sichere Weise zu ermöglichen.

Bei kathodisch geschützten Rohrleitungen, die abschnittsweise mit Überwachungseinheiten für den kathodischen Schutzstrom versehen sind, lässt sich die für das aufzugebende Wechselstromsignal erforderliche Erfassungseinheit vorteilhaft auf einfache Weise in die Überwachungseinheit für die Schutzstromüberwachung integrieren. Vorteilhaft wird hierbei der kathodische Schutzstrom von dem Wechselstromsignal überlagert und getrennt analysiert.

Die von der Überwachungseinheit erfassten Signale können dann vorteilhaft entweder über bereits verlegte Erdkabel oder drahtlos per Funk, GPS oder Satellitenübertragung an die zentrale Überwachungsstelle übermittelt und bedarfsweise weiter ausgewertet werden.

Das erfindungsgemäße Verfahren basiert auf dem physikalischen Effekt, dass die Spannungs- oder Stromamplituden eines Wechselstromsignals in Abhängigkeit von der Entfernung vom Ort der Beaufschlagung am Rohrleitungsabschnitt gedämpft werden. Hierzu werden an der Rohrleitung in bestimmten Abständen Signalgeneratoren angebracht, die die Rohrleitung mit einem Wechselstromsignal beaufschlagen. Je weiter entfernt der Messort vom Ort der Beaufschlagung des zusätzlichen Stromsignals entfernt ist, desto stärker werden die Amplitudensiginale gedämpft. Falls Fehler in der Beschichtung vorliegen, die einen elektrischen Kontakt vom Leitungsrohr zum Erdreich herstellen, machen sich diese in einer charakteristischen Signalanzeige im Grad der Dämpfung bemerkbar und lassen sich somit eindeutig diesem Leitungsrohrabschnitt zuordnen.

Aus dem Maß der zuvor ermittelten Dämpfung in dem fehlerfreien Leitungsabschnitt im Abgleich zur ermittelten Ist- Dämpfung kann der Fehlerort in Bezug zur Entfernung vom Beaufschlagungsort des Signales mit ausreichender Genauigkeit eingegrenzt werden. Um den schadhaften Bereich begutachten und entsprechende Maßnahmen einleiten zu können wird anschließend durch geeignete Messungen vor Ort die Schadensstelle exakt lokalisiert.

Bei dem erfindungsgemäßen Verfahren wird zunächst die Wellenform des Wechselstromsignals in den beidendigen Überwachungseinheiten des jeweils zu überwachenden Abschnittes in Abhängigkeit von der Entfernung des Signals vom Ort der Beaufschlagung mit diesem Signal erfasst und das zeitabhängige in ein frequenzabhängiges Signal umgewandelt.

Die hieraus ermittelte Dämpfung der Frequenzamplituden wird anschließend mit der zuvor ermittelten Dämpfung eines Vergleichssignals verglichen, so dass etwaige Abweichungen einem Beschichtungsdefekt zugeordnet werden können.

Anhand von in bestimmten Zeitabständen durchgeführten Messungen lässt sich aus dem Grad der zeitlichen Änderung dieser Dämpfungsabweichungen ermitteln, ob ein Beschichtungsdefekt an der Rohrleitung vorliegt.

Grundsätzlich kommt ein sehr breites Frequenzspektrum zur Auswahl einer geeigneten Überlagerungsfrequenz in Betracht, um verschiedene Informationen über den Zustand der Beschichtung zu erhalten. Niedrige Frequenzen sind beispielsweise besser geeignet Beschädigungen an der Beschichtung selbst zu erkennen, während höhere Frequenzen besser geeignet sind, Beschichtungsablösungen von der Stahloberfläche zu detektieren.

Die maximale Frequenz ist begrenzt durch den Anzeigebereich des Signals, der von der Länge des zu prüfenden Rohrabschnittes abhängt. Weiterhin beeinflusst die Qualität und Art der Beschichtung den Anzeigebereich..

Die minimale Frequenz ist begrenzt durch ein noch ausreichendes Signal-/RauschVerhältnis. Die optimale Frequenz des Wechselstromsignals richtet sich zum Einen nach der Messfrequenz andererseits auch nach dem Dämpfungsgrad über die Länge des Rohrabschnittes und dem Signal/Rausch-Verhältnis.

Die beste zu wählende Überlagerungsfrequenz wird deshalb ein Kompromiss sein zwischen Anzeigebereich des Signals und Signal-/Rauschverhältnis.

Wesentlich ist jedoch in jedem Fall, dass sich die Frequenz des Wechselstromsignals sich deutlich von den Frequenzen oder deren harmonischen von Störsignalen unterscheidet, wie sie beispielsweise von kreuzenden Stromleitungen induziert werden. Erst hierdurch wird eine eindeutige Zuordnung zu einem möglichen Fehler im überwachten Leitungsrohrabschnitt möglich.

Bei Stromleitungen liegen die Frequenzen dieser Störsignale z. B bei 50 oder 60 Hz. Zu Erkennung von Beschichtungsschäden werden für diesen Fall beispielsweise gute Ergebnisse mit einer Frequenz von 130 Hz erzielt.

In der Praxis kommen aus den vorbeschriebenen Gründen niedrigere Frequenzen als 1 Hz und höhere Frequenzen als 1000 Hz praktisch nicht in Betracht.

Ein weiterer zu berücksichtigender Aspekt kann auch darin bestehen, möglichst eine Frequenz zu wählen, die mit üblichen, preiswert verfügbaren A/D-Wandlern verarbeitet werden kann.

Das Wechselstromsignal selbst ist vorteilhaft sinusförmig ausgebildet, um die nachfolgende Transformation des Zeitsignals in ein Frequenzsignal der digitalisierten Signale z. B. durch Fourier-Transformation zu erleichtern. Andere Signalformen, z. B. rechteckige, sind aber grundsätzlich auch möglich.

Ein weiterer Vorteil des erfindungsgemäßen Verfahrens liegt darin, dass die Überwachungseinheit für Beschädigungen an der Beschichtung auch bei kathodisch geschützten Rohrleitungen bedarfsweise und zeitlich unabhängig beispielsweise einmal am Tag zugeschaltet werden kann.

Da die Dauer des eigentlichen Messzyklusses für das Wechselstrom signal im Sekundenbereich oder sogar darunter liegt, kann so in Kombination mit der Überwachung der Signale von einer zentralen Stelle sehr effektiv und schnell eine umfassende, kostengünstige und sichere Überwachung der gesamtem Rohrleitung erfolgen und Beschädigungen an der Beschichtung können frühzeitig erkannt werden.

Bei Verwendung mehrerer Signalgeneratoren für die Länge der Rohrleitung, wobei jeder Signalgenerator ein oder mehrere Rohrleitungsabschnitte umfassen kann, ist es für die Qualität und Aussagekraft der Messung des Wechselstromsignals notwendig, dass jeweils immer nur ein Signalgenerator für die jeweilige Messung eingeschaltet ist. Da die Signalgeneratoren zu beiden Seiten des Rohres das Stromsignal aussenden, würde sonst möglicherweise das auszuwertende Signal von weiteren Signalen anderer Signalgeneratoren überlagert und das Ergebnis damit verfälscht. Wichtig ist es deshalb, dass die Signalgeneratoren entweder so programmiert sind, dass bei jeder Messung immer nur ein Signalgenerator aktiv ist oder aber ein weiterer aktiver Signalgenerator generiert die Wechselstromsignale auf einer anderen Frequenz.

Besondere Beachtung muss auch der Stabilität von Spannung und Frequenz des Wechselstromsignals geschenkt werden, da die zu erfassenden und auszuwertenden Signale sehr stark von diesen Faktoren beeinflusst werden. In Versuchen hat sich herausgestellt, dass für die Spannungsstabilität ± 0,2 % und für die Frequenzstabilität ± 0,02% ausreichend sind.

Nachfolgend wird die Erfindung anhand einer Figur näher erläutert.

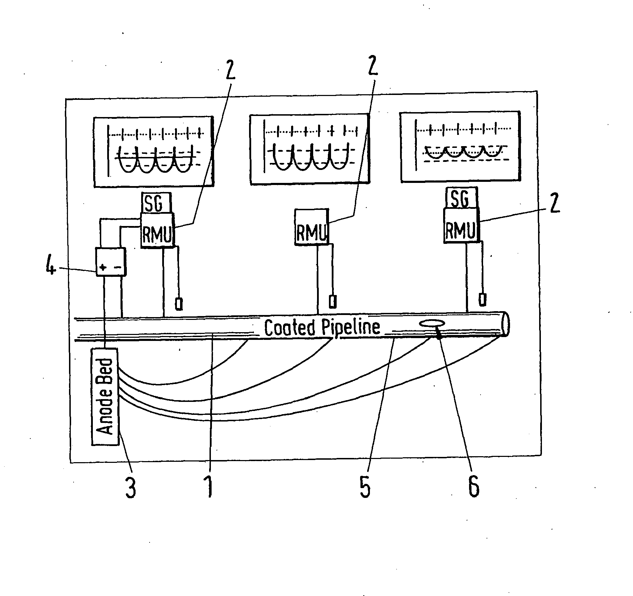

Die Figur zeigt schematisch den Messaufbau zur Fernüberwachung und Detektierung von Beschichtungsdefekten am Beispiel einer erdverlegten, kathodisch geschützten Rohrleitung.

Eine im Erdreich verlegte Rohrleitung 1 ist über eine Beschichtung 5 passiv und über eine fest installierte kathodische Schutzstromanlage, bestehend aus einer Anode 3 und einem Gleichstromgenerator 4, aktiv vor Korrosion geschützt.

Die Rohrleitung 1 ist in Abständen mit ebenfalls fest installierten Überwachungseinheiten (RMU - Remote Monitoring System) 2, 2' versehen, die wie nachfolgend beschrieben, mehrere Aufgaben zu erfüllen haben.

Die Abstände zwischen den Überwachungseinheiten 2, 2' werden u. a. bestimmt durch mögliche Störeinflüsse (z. B. Streuströme, induzierte Ströme aus Stromleitungen, Wasserläufen, kathodischem Schutzstrom usw.). Das bedeutet, je größer die Anzahl und der Grad der Störung ist, desto geringer werden die Abstände für die Überwachungseinheiten gewählt. Bei einer ungestörten Verlegung der Rohrleitung, beispielsweise in einem Wüstengebiet, kann der Abstand der Überwachungseinheiten über 30 km betragen, während in dicht besiedelten Industrieregionen der Abstand 5 oder 10 km betragen kann.

Bei dem in der Figur dargestellten Ausführungsbeispiel ist jede Überwachungseinheit 2, 2' erfindungsgemäß mit einer hier nicht näher dargestellten Erfassungseinheit für das Wechselstromsignal aber nur jede zweite Überwachungseinheit 2 mit einem Signalgenerator zur Einspeisung des Wechselstromsignals versehen.

Die Überwachungseinheiten 2, 2' haben einerseits die Aufgabe den kathodischen Schutzstrom zu überwachen und zu steuern zum Anderen haben die darin integrierten Erfassungseinheiten für das Wechselstromsignal die Aufgabe, das Wechselstromsignal, ausgehend vom Ort der Beaufschlagung, über die Rohrlänge zu erfassen und das erfasste und gedämpfte Signal an eine zentrale Überwachungsstelle weiterzuleiten.

Im vorliegenden Beispiel weist die Beschichtung 5 der Rohrleitung 1 rechtsseitig einen Defekt 6 auf, der eine elektrische Verbindung zwischen Rohrleitung und umgebenden Erdreich bewirkt.

Zur Überprüfung der Rohrleitung 1 auf Beschichtungsdefekte wird jeweils nur ein Signalgenerator der Rohrleitung aktiviert um störende Einflüsse auf das Messergebnis von Wechselstromsignalen anderer aktiver Signalgeneratoren auszuschließen.

Als Wechselstromsignal wird im vorliegenden Beispiel von dem Signalgenerator der linken Überwachungseinheit 2 ein sinusförmiger Wechselstrom dem kathodischen Schutzstrom überlagert.

Die Erfassungseinheit der Überwachungseinheit 2' zeigt einen für eine unbeschädigte Beschichtung normalen Verlauf bereits umgewandelter Frequenzamplituden des Wechselstromsignals in dem erfassten Rohrleitungsabschnitt, während die rechts dargestellte Überwachungseinheit 2 ein deutlich gedämpftes Signal, bedingt durch den über den Beschichtungsfehler 6 abfließenden Strom von der Rohrleitung 1 ins Erdreich, erfasst.

Der Signalverlauf wird an jeder installierten Überwachungseinheit 2, 2' erfasst und der zentralen Überwachungsstelle übermittelt, wo durch Vergleich mit vorherigen Messungen der Grad der Änderung der Dämpfung festgestellt und daraus das Fehlersignal abgeleitet wird. Da die Lage der Signalanzeige in Bezug auf den überwachten Leitungsrohrabschnitt gut eingrenzbar ist, kann der fehlerbehaftete Rohrabschnitt recht genau lokalisiert werden.

Zur Begutachtung der schadhaften Stelle und zur Einleitung notwendiger Reparaturmaßnahmen wird anschließend die exakte Lokalisierung durch geeignete Maßnahmen vor Ort vorgenommen.

### Bezugszeichenliste

| **Nr.** | **Bezeichnung** |
|---|---|
| 1 | Rohrleitung |
| 2 | Überwachungseinheit mit integriertem Siqnalgenerator |
| 2' | Überwachungseinheit ohne Signalgenerator |
| 3 | Anode |
| 4 | kathodischer Schutzstrom |
| 5 | Beschichtung |
| 6 | Beschichtunqsfehler |

## Patentansprüche

1. Verfahren zur Überwachung und Detektierung von Beschichtungsdefekten in einem definierten Abschnitt einer erd- oder wasserverlegten beschichteten Rohrleitung (1), wobei die Rohrleitung (1) abschnittsweise an den Enden des jeweiligen Abschnittes mit einer fest installierten Überwachungseinheit (2, 2') versehen ist, und das Verfahren folgende Schritte aufweist:
- Taktweises Aufgeben eines Wechselstromsignals auf die Rohrleitung (1), dessen fest vorgegebene und stabile Frequenz unter Berücksichtigung der Toleranz im Vergleich zu den im Rahmen der Überwachung gemessenen Frequenzen möglicher äußerer Störsignale unterschiedlich ist
- Erfassen der Wellenform des Wechselstromsignals in den beidendigen Überwachungseinheiten (2, 2') des jeweils zu überwachenden Abschnittes zur Ermittlung des entfernungsabhängigen Dämpfungsgrades in Abhängigkeit von der Entfernung des Signals vom Ort der Beaufschlagung mit diesem Signal
- Umwandlung des zeitabhängigen Signals in ein frequenzabhängiges Signal
- Ermittlung der Frequenzamplituden entsprechend der Frequenz des Wechselstromsignals
- Ermittlung des Dämpfungsgrades der Frequenzamplituden innerhalb des zu überwachenden Rohrleitungsabschnittes und Vergleich mit zuvor in den beidendigen Überwachungseinheiten ermittelten Vergleichswerten,
wobei das Verfahren unabhängig von einem aktiven Korrosionsschutzverfahren angewendet wird.

2. Verfahren nach Anspruch 1
**dadurch gekennzeichnet,**
**dass** die Frequenz des Wechselstromsignals zwischen 1 und 1000 Hz beträgt.

3. Verfahren nach Anspruch 1 und 2
**dadurch gekennzeichnet,**
**dass** bei kathodisch geschützten Rohrleitungen (1) der kathodische Schutzstrom (4) von dem Wechselstromsignal überlagert und getrennt analysiert wird.

4. Verfahren nach Anspruch 3
**dadurch gekennzeichnet,**
**dass** das Wechselstromsignal zeitlich unabhängig von dem dem Leitungsabschnitt permanent zugeführten kathodischen Schutzstrom aufgegeben wird.

5. Verfahren nach den Ansprüchen 1 - 4
**dadurch gekennzeichnet,**
**dass** die Stromform des Wechselstromsignals sinusförmig ist.

6. Verfahren nach einem der Ansprüche 1-5
**dadurch gekennzeichnet,**
**dass** die erfassten Messdaten des Wechselstromsignals drahtgebunden einer zentralen Überwachungsstelle übermittelt werden.

7. Verfahren nach einem der Ansprüche 1-5
**dadurch gekennzeichnet,**
**dass** die erfassten Messdaten des Wechselstromsignals drahtlos einer zentralen Überwachungsstelle übermittelt werden.

8. Verfahren nach einem der Ansprüche 1-5
**dadurch gekennzeichnet,**
**dass** der definierte Rohrleitungsabschnitt ein oder mehrere Kilometer lang ist.

9. Vorrichtung zur Überwachung und Detektierung von Beschichtungsdefekten (6) in einem definierten ein oder mehrere Kilometer umfassenden Abschnitt einer erd-oder wasserverlegten Rohrleitung (1) zur Durchführung des Verfahrens nach Anspruch 1, wobei die Rohrleitung (1) abschnittsweise an den Enden des jeweiligen Abschnittes mit einer fest installierten Überwachungseinheit (2, 2') zur Erfassung des Wechselstromsignals, die Rohrleitung (1) in Abhängigkeit von der Erfass- und Auswertbarkeit des Wechselstromsighals in Abständen mit einem Signalgenerator und die Rohrleitung mit einer zentralen Überwachungsstelle versehen ist, wobei
- das Signalgenerator in der Weise angeordnet ist, um taktweises ein Wechselstromsignal auf die Rohrleitung aufzugeben, dessen fest vorgegebene und stabile Frequenz unter Berücksichtigung der Toleranz im Vergleich zu den im Rahmen der Überwachung gemessenen Frequenzen möglicher äußerer Störsignale unterschiedlich ist, wobei dieses Signal unabhängig von einem aktiven Korrosionsschutzverfahren ist,
- die beidendigen Überwachungseinheiten (2, 2') des jeweils zu überwachenden Abschnittes in der Weise angeordnet sind, um die Wellenform des Wechselstromsignals zur Ermittlung des entfernungsabhängigen . Dämpfungsgrades in Abhängigkeit von der Entfernung des Signals vom Ort der Beaufschlagung mit diesem Signal zu erfassen,
- die zentralle Überwachungsstelle in der Weise angeordnet ist, um das zeitabhängige Signal in ein frequenzabhängiges Signal zu umwandeln, die Frequenzamplituden entresprechend der Frequenz des Wechselstromsignals zu ermitteln und, das Dämpfungsgrad der Frequenzamplituden innerhalb des zu überwachenden Rohrleitungsachnittes zu ermitteln, und dieses Dämpfungsgrad mit zuvor in den beidendigen Überwachungseinheiten ermittelten Vergleichswerten zu vergleichen.

10. Vorrichtung nach Anspruch-9
**dadurch gekennzeichnet,**
**dass** die Länge der Rohrleitung (1) zwischen den Signalgeneratoren ein oder mehrere Rohrleitungsabschnitte umfasst, wobei zum jeweiligen Messzeitpunkt die Rohrleitung (1) mit nur einem Wechselstromsignal eines aktivierten Signalgenerators beaufschlagt wird.

11. Vorrichtung nach Anspruch -9
**dadurch gekennzeichnet,**
**dass** die Länge der Rohrleitung (1) zwischen den Signalgeneratoren ein oder mehrere Rohrleitungsabschnitte umfasst, wobei zum jeweiligen Messzeitpunkt die Rohrleitung (1) mit zwei oder mehreren Wechselstromsignalen unterschiedlicher Frequenzen von jeweils zwei oder mehreren aktivierten Signalgeneratoren beaufschlagt wird,

12. Vorrichtung nach einem der Ansprüche 9-11 1
**dadurch gekennzeichnet,**
**dass** die Signalgeneratoren in den Überwachungseinheiten (2) integriert sind.

13. Vorrichtung nach einem der Ansprüche 9-12
**dadurch gekennzeichnet**
**dass** bei kathodisch geschützten Rohrleitungen (1) die Einheit zur Steuerung und Überwachung des kathodischen Schutzstromes in der Überwachungseinheit (2, 2') für das Wechselstromsignal integriert ist.

## Claims

1. A method for monitoring and detecting coating defects in a defined section of an underground or underwater coated pipe line (1), wherein the pipe line (1) is provided section-wise at the ends of the particular section with a fixedly installed monitoring unit (2,2'), and the method comprises the following steps :
- application of an AC current signal at a clock cycle onto the pipe line (1), whose fixedly predetermined and stable frequency, taking into consideration the tolerance, is distinct in comparison to the frequencies measured within the scope of the monitoring of possible external interference signals,
- acquisition of the wave form of the AC current signal in the two terminal monitoring units (2,2') of the particular section to be monitored for the determination of the distance-dependent attenuation level as a function of the distance of the signal from the site of the impression with this signal,
- conversion of the time-dependent signal into a frequency-dependent signal,
- determination of the frequency amplitudes corresponding to the frequency of the AC current signal,
- determination of the level of attenuation of the frequency amplitudes within the pipe line section to be monitored and comparison with comparison values previously determined in the two terminal monitoring units,
wherein the method is performed independently from an active method of protection against corrosion.

2. The method of claim 1, **characterized in that** the frequency of the AC current signal is between 1 and 1000 Hz.

3. The method of claims 1 and 2, **characterized in that** in cathodically protected pipe lines (1) the cathodic protective current (4) is superimposed by the AC current signal and separately analyzed.

4. The method of claim 3, **characterized in that** the AC current signal is applied independently in time of the cathodic protective current supplied permanently to the line section.

5. The method of claims 1-4, **characterized in that** the current form of the AC current signal is sinusoidal.

6. The method of one of claims 1-5, **characterized in that** the acquired measurement data of the AC current signal are conducted over wires to the central monitoring station.

7. The method of one of claims 1-5, **characterized in that** the acquired measurement data of the AC current signal are conducted wirelessly to the central monitoring station.

8. The method of one of claims 1-5, **characterized in that** the defined pipe line section has a length of one or several kilometers.

9. A device for monitoring and detecting coating defects (6) in a defined section of one or several kilometers of an underground or underwater pipe line (1) for carrying out the method of claim 1, wherein the pipe line (1) z is provided section-wise at the ends of the particular section with a fixedly installed monitoring unit (2,2') for acquiring the AC current signal and the pipe line (1), as a function of the detectability and evaluatibility of the AC. current signal, is provided at intervals with a signal generator, and the pipe line is provided with a central monitoring station, wherein
- the signal generator is arranged in order to apply onto the pipe line an AC current signal at a clock cycle, whose fixedly predetermined and stable frequency, taking into consideration the tolerance, is distinct in comparison to the frequencies measured within the scope of the monitoring of possible external interference signals, this signal being independent from an active method of protection against corrosion,
- the two terminal monitoring units (2,2') of the particular section to be monitored are arranged in order to acquire the wave form of the AC current signal for the determination of the distance-dependent attenuation level as a function of the distance of the signal from the site of the impression with this signal,
- the central monitoring station is arranged in order to convert the time-dependent signal into a frequency-dependent signal, to determine the frequency amplitudes corresponding to the frequency of the AC current signal and determine the level of attenuation of the frequency amplitudes within the pipe line section to be monitored, and compare this level of attenuation with comparison values previously determined in the two terminal monitoring units.

10. The device of claim 9, **characterized in that** the length of the pipe line (1) between the signal generators is one or several pipe line sections, wherein at the particular measurement point in time the pipe line (1) is impressed with only one AC current signal of an activated signal generator.

11. The device of claim 9, **characterized in that** the length of the pipe line (1) between the signal generators is one or several pipe line sections, wherein at the particular measurement point in time the pipe line (1) is impressed with two or several AC current signals of different frequencies of, in each instance, two or several activated signal generators.

12. The device of one of claims 9-11, **characterized in that** the signal generators are integrated into the monitoring units (2) .

13. The device of one of claims 9-12, **characterized in that** in the case of cathodically protected pipe lines (1) the unit for the control and monitoring of the cathodic protective current is integrated into the monitoring unit (2,2') for the AC current signal.

## Revendications

1. Procédé destiné à surveiller et détecter des défauts de revêtement dans une partie définie d'une canalisation (1) recouverte, enfouie dans la terre ou l'eau, la conduite (1) étant dotée par endroits sur les extrémités de la partie concernée d'une unité de contrôle (2, 2') installée de façon fixe, et le procédé présentant les étapes suivantes :
- envoi cyclique d'un signal de courant alternatif sur la canalisation (1), dont la fréquence prédéfinie de façon fixe et stable est différente compte tenu de la tolérance par rapport aux fréquences, mesurées dans le cadre de la surveillance, de signaux parasites extérieurs possibles,
- détection de la forme d'onde du signal de courant alternatif dans les unités de surveillance (2, 2') sur les deux extrémités de la partie à surveiller respectivement pour déterminer le degré d'atténuation dépendant de la distance en fonction de la distance du signal au lieu d'alimentation avec ce signal
- conversion du signal dépendant du temps en un signal dépendant de la fréquence
- détermination des amplitudes de fréquence en fonction de la fréquence du signal de courant alternatif
- détermination du degré d'atténuation des amplitudes de fréquence à l'intérieur de la partie de canalisation à surveiller et comparaison avec des valeurs de comparaison déterminées auparavant dans les unités de surveillance des deux extrémités,
le procédé étant appliqué indépendamment d'un procédé actif de protection anticorrosion

2. Procédé selon la revendication 1,
**caractérisé en ce que**
la fréquence du signal de courant alternatif se situe entre 1 et 1000 Hz.

3. Procédé selon les revendications 1 et 2,
**caractérisé en ce que**,
dans le cas de canalisations. (1) protégées à la cathode, le courant de protection (4) cathodique est superposé par le signal de courant alternatif et analysé de façon séparée.

4. Procédé selon la revendication 3,
**caractérisé en ce que**
le signal de courant alternatif est fourni dans le temps indépendamment du courant de protection cathodique amené de façon permanente à la partie de canalisation.

5. Procédé selon les revendications 1 à 4,
**caractérisé en ce que**
la forme de courant du signal de courant alternatif est sinusoïdale.

6. Procédé selon l'une quelconque des revendications 1 à 5,
**caractérisé en ce que**
les données de mesure enregistrées du signal de courant alternatif sont transmises par fil à un service de surveillance central.

7. Procédé selon l'une des revendications 1 à 5,
**caractérisé en ce que**
les données de mesure enregistrées du signal de courant alternatif sont transmises sans fil à un service de surveillance central.

8. Procédé selon l'une des revendications 1 à 5,
**caractérisé en ce que**
la partie de canalisation définie fait un ou plusieurs kilomètres.

9. Dispositif destiné à surveiller et détecter des défauts de revêtement (6) dans une partie définie, comprenant un ou plusieurs kilomètres, d'une canalisation (1) enfouie dans la terre ou l'eau pour la mise en oeuvre du procédé selon la revendication 1, la conduite (1) étant dotée par endroits sur les extrémités de la partie respective d'une unité de surveillance (2, 2') installée de façon fixe pour l'enregistrement du signal de courant alternatif, la canalisation (1) d'un générateur de signaux en fonction de la possibilité d'enregistrement et d'analyse du signal de courant alternatif à des intervalles et la canalisation d'un centre de surveillance central,
- le générateur de signaux étant disposé pour envoyer par cycles un signal de courant alternatif à la canalisation, dont la fréquence prédéfinie de façon fixe et la fréquence stable est différente compte tenu de la tolérance par rapport aux fréquences, mesurées dans le cadre du contrôle, de signaux parasites extérieurs possibles, ce signal étant indépendant d'un procédé anticorrosion actif,
- les unités de surveillance (2, 2') sur les deux extrémités de la partie à surveiller respectivement étant disposées pour enregistrer la forme d'onde du signal de courant alternatif pour déterminer le degré d'atténuation, dépendant de la distance, en fonction de la distance du signal au lieu de l'alimentation avec ce signal,
- le service de surveillance central étant disposé pour convertir le signal, dépendant du temps, en un signal dépendant de la fréquence, déterminer les amplitudes de fréquence en fonction de la fréquence du signal de courant alternatif, et déterminer le degré d'atténuation des amplitudes de fréquence à l'intérieur de la partie de canalisation à surveiller, et comparer ce degré d'atténuation avec des valeurs de comparaison déterminées auparavant dans les unités de surveillance des deux extrémités.

10. Dispositif selon la revendication 9,
**caractérisé en ce que**
la longueur de la canalisation (1) entre les générateurs de signaux comprend une ou plusieurs parties de canalisation, la canalisation (1) n'étant alimentée à l'instant de mesure concerné qu'avec un seul signal de courant alternatif d'un générateur de signaux activé.

11. Dispositif selon la revendication 9,
**caractérisé en ce**
**que** la longueur de la canalisation (1) entre les générateurs de signaux comprend une ou plusieurs parties de canalisation, la canalisation (1) étant alimentée à l'instant de mesure respectif avec deux ou plusieurs signaux de courant alternatif de différentes fréquences provenant de respectivement ou plusieurs générateurs de signaux activés.

12. Dispositif selon l'une des revendications 9 à 11,
**caractérisé en ce que**
les générateurs de signaux sont intégrés dans les unités de surveillance (2).

13. Dispositif selon l'une des revendications 9 à 12,
**caractérisé en ce que**, dans le cas de canalisations (1) protégées à la cathode, l'unité pour la commande et la surveillance du courant de protection cathodique est intégrée dans l'unité de surveillance (2, 2') pour le signal de courant alternatif.,
